# EUROPÄISCHE PATENTANMELDUNG

(11) **EP 1 136 328 A2**
(43) Veröffentlichungstag der Anmeldung: **26.09.2001**
(21) Anmeldenummer: 00126335.9
(22) Anmeldetag: 02.12.2000
(51) Int. Cl.: B60R 21/20

(54) **Lenkrad- Airbagmodul mit einem Gasgenerator als Schwingungsdämpfermasse**

(30) Priorität: 18.03.2000 DE 10013472
(71) Anmelder: Firma Carl Freudenberg, 69469 Weinheim (DE)
(72) Erfinder: Kern, Klaus, 79395 Neuenburg (DE); Back, Friedrich, 79379 Müllheim (DE); Leibach, Markus, 79426 Buggingen (DE); Dürre, Markus, 79379 Müllheim (DE)

(57) **Zusammenfassung**

Gasgenerator für einen Airbag an einem Kraftfahrzeug-Lenkrad, der beweglich als Schwingungsdämpfermasse über eine gasundurchlässige, ringförmige Membran aus polymerem Material und ein an einem ihrer Ränder angebrachtes Befestigungsblech mit dem Airbaggehäuse verbunden ist, wobei die Membran (4,30) mit ihrem verbliebenen anderen Rand (5) direkt an die Außenwand (3) des Gasgenerators (1) anschließt.

## Beschreibung

### Technisches Gebiet

Die Erfindung befasst sich mit einem Gasgenerator für einen Airbag an einem Kraftfahrzeug-Lenkrad der beweglich als Schwingungsdämpfermasse über eine gasundurchlässige, ringförmige Membran aus polymerem Material und ein an einem ihrer Ränder angebrachtes Befestigungsblech mit dem Airbaggehäuse verbunden ist.

Die bei Kraftfahrzeugen während der Fahrt oder auch im Stillstand mit laufendem Motor auftretenden Schwingungen können sich auf die Lenksäule übertragen und von dort aus auf das Lenkrad. Um diesen Schwingungen am Lenkrad entgegenzuwirken und den Fahrkomfort zu verbessern, sind Schwingungstilger entweder direkt an der Lenksäule oder im Lenkrad unterhalb des dort befindlichen Airbagmoduls angebracht worden. Neuere Lösungen beziehen das Airbagmodul oder auch den Gasgenerator als Schwingmasse für den Schwingungsdämpfer ein.

### Stand der Technik

Aus der DE OS 39 25 761 ist beispielsweise eine Konstruktion bekannt, bei der entweder das Airbagmodul oder ein Teil davon, in diesem Falle der Gasgenerator als Trägheitsmasse verwendet werden. Für den Fall, dass der Gasgenerator die Trägheitsmasse ist, wird der Gasgenerator von einem Airbagaabstandsblech umgeben das verhindert, dass der Airbag und der Gasgenerator in Kontakt miteinander kommen. Die gesamte Ausbildung des Gasgenerators und seine Anbringung innerhalb des Airbagmoduls ist aufwendig. Es ist nicht auszuschließen, dass während der Auslösung des Gasgenerators Gase ungewollt nach Außen dringen können.

Eine verbesserte Lösung ist in dem DE Gebrauchsmuster 299 02 033 enthalten, bei der ein Montagezylinder aus einem elastischen Werkstoff verwendet wird, dessen freie Ränder einerseits mit einem am Gasgeneratorträger angeordneten ringförmigen Montageblech und andererseits mit einem mit dem Gehäuse des Gasgenerators verbundenen umlaufenden Montageflansch verbunden sind. Hierdurch wird eine gute Abdichtung für die Gase erreicht, die Verbindung des Montagezylinders zum Montageblech bzw. Montageflansch ist jedoch auf die Randbereiche derselben beschränkt. Es ist deshalb nicht auszuschließen, dass bei dieser Lösung Beschädigungen an den Verbindungsstellen auftreten können.

### Darstellung der Erfindung

Der Erfindung liegt die Aufgabe zugrunde eine konstruktive Ausbildung für die Befestigung der Membran am Gasgenerator zu finden die möglichst einfach herzustellen ist und eine hohe Sicherheit im Gebrauch gewährleistet.

Die Lösung der gestellten Aufgabe erfolgt bei einem Gasgenerator der Eingangs genannten Art erfindungsgemäß dadurch, dass die Membran mit ihrem verbliebenen anderen Rand direkt mit der Außenwand des Gasgenerators verbunden ist. Hierbei entfällt der bisher genutzte Montageflansch zwischen Membran und Gasgenerator.

In weiterer Ausgestaltung der Erfindung ist die Membran kegelstumpfförmig ausgebildet. Eine solche Form ergibt ein verbessertes Schwingverhalten und auch fertigungstechnische Vorteile bei der Verbindung der Membran mit dem Gasgenerator.

Es ist günstig, wenn die Membran über einen für die Verbindung mit der Gasgeneratorwand verwendeten Teilbereich auf ihrer Innenseite zylindrisch ausgebildet ist. Die Innenseite der Membran folgt dann der Wandform des Gasgenerators. Außerdem kann die Membran in dem Teilbereich eine verstärkte Wanddicke haben und in Form eines Rings ausgebildet sein. Der Ring selbst kann auf seiner Außenseite mit Vorsprüngen versehen sein, die eventuelle Anschläge dämpfen können. Dieses ist insbesondere dann von Vorteil, wenn der Gasgenerator von einem Airbagabstandsblech zumindest teilweise überdeckt ist. Störende Geräusche durch diese Anschläge werden dadurch vermindert.

Generell kann die Membran mit der Gasgeneratorwand auf verschiedene Weise verbunden werden. Beispielsweise durch Kleben. Die günstigste Verbindung ist jedoch durch Vulkanisation.

Zur Unterstützung der Fertigung kann die Gasgeneratorwand an der Verbindungsstelle für die Membran mit einer nach außen hervorstehenden Ringwulst versehen sein.

Eine besonders gute Verbindung zwischen der Membran und der Gasgeneratorwand wird dann erreicht, wenn die Gasgeneratorwand unterhalb der Verbindungsstelle für die Membran einen Überzug aus polymerem Material hat. Die Membran, der Ring und der Überzug können aus gleichem Material bestehen und in einem Vulkanisationsschritt mit dem Gasgenerator und dem Befestigungsblech verbunden sein. Aus Fertigungsgründen kann es hier zweckmäßig sein, dass die Generatorwand im Anschlussbereich für den Ring und den Überzug einen größeren Durchmesser hat als der darüberliegende Bereich.

Der Überzug kann auch gleichzeitig dazu verwendet werden, dass an seinem unteren Ende eine Randwulst angebracht wird, durch welche eventuelle in axialer Richtung auftretende Anschläge gedämpft werden können. Die Festigkeit und auch das Schwingverhalten der Membran kann dadurch unterstützt werden, dass auf ihren Umfang verteilt, mehrere längs der Membran verlaufende Verstärkungsrippen angebracht werden.

### Kurzbeschreibung der Zeichnung

Anhand der in der Zeichnung dargestellten Ausführungsbeispiele wird die Erfindung nachstehend näher erläutert.

Es zeigt:
- Fig. 1: den Gasgenerator teilweise im Längsschnitt untergebracht in einem Diffusor.
- Fig. 2: einen Gasgenerator mit einer Ringwulst in der Gasgeneratorwand,
- Fig. 3: einen Gasgenerator teilweise im Längsschnitt mit einem Überzug unterhalb der Verbindungsstelle.
- Fig. 4: einen Gasgenerator teilweise im Längsschnitt mit einer Membran mit Verstärkungsrippen.
- Fig. 5: eine Draufsicht auf den Gasgenerator nach Fig. 4 und
- Fig. 6: eine weitere Ausführungsform eines Gasgenerators mit Haltemembran teilweise im Längsschnitt.

### Ausführung der Erfindung

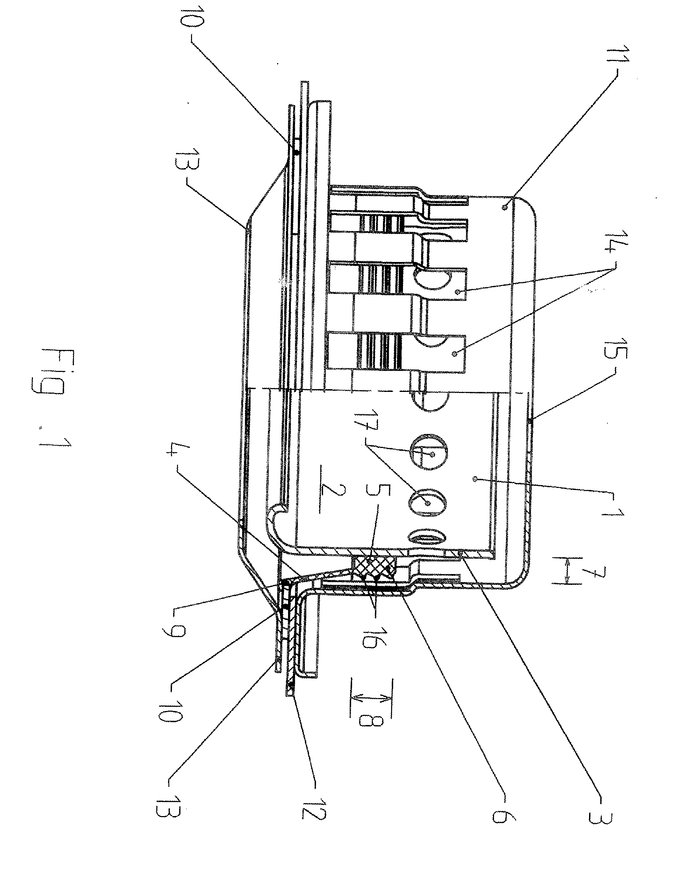

Die Fig. 1 zeigt einen Gasgenerator 1, der in einer Ausnehmung im Airbag in an sich bekannter Weise untergebracht wird. Vom Gasgenerator 1 ist lediglich das Filterrohr 2 ohne Treibstoff und Verschluß gezeigt. Das Filterrohr 2 bildet die Außenwand 3 des Gasgenerators 1. Über eine Membran 4 ist die Außenwand 3 des Gasgenerators 1 mit dem nicht näher eingezeichneten Airbaggehäuse verbunden. Die Befestigung der Membran 4 an der Außenwand 3 des Gasgenerators 1 erfolgt über den oberen Rand 5 der Membran 4, der im vorliegenden Beispiel in der Form eines Ringes 6, ausgebildet ist. Dieser Ring 6 wird durch eine Verstärkung der Wanddicke 7 des Teilbereichs 8 der Membran 4 erreicht, mit dem die Membran 4 direkt an der Wand 3 befestigt ist. Der untere Rand 9 der Membran 4 ist mit einem Befestigungsblech 10 verbunden. Über dieses Befestigungsblech 10 wird die Membran 4 mit dem Airbaggehäuse und dem Airbag 12 befestigt. Gleichzeitig wird auch das den Gasgenerator 1 umgebende Airbagabstandsblech 11 mit dem Airbag 12 und einer Bodenplatte 13 verschraubt. Das Airbagabstandsblech 11 dient zum Schutz des Airbags und ist rundum mit einer Vielzahl von Schlitzen 14 versehen. Außerdem hat das Blech 11 in seiner Mitte die Öffnung 15. Die Bodenplatte 13 dient der Absicherung des Gasgenerators 1 in axialer Richtung nach unten und zur Fixierung des gesamten Systems am Lenkrad. Die Membran 4 ist kegelstumpfförmig ausgebildet und weist mit ihrem kleineren Durchmesser nach oben. Generell ist es möglich, die Membran 4 über den Teilbereich 8, der für die Verbindung mit der Gasgeneratorwand dient, auf ihrer Innenseite zylindrisch auszubilden. Die Membran 4 kann beispielsweise in gleicher Stärke beibehalten werden und ihr oberer Rand 5 in zylindrischer Form vorliegen. Günstiger ist jedoch die Ausbildung als verstärkter Ring 6. Da dadurch eine bessere Befestigung der Membran 4 an der Außenwand 3 durch Vulkanisation durchgeführt werden kann. Außerdem kann der Ring 6 mit den vorstehenden Wülsten 16 versehen werden, die bei übermäßig großen Ausschläge des Gasgenerators 1 als Anschlagdämpfer dienen können, wenn sie an der Wand des Blechs 11 zur Anlage kommen. Die im Diffusor 2 enthaltenen Löcher 17 sind die Austrittsöffnungen für die bei einer Auslösung des Gasgenerators entstehenden Gase.

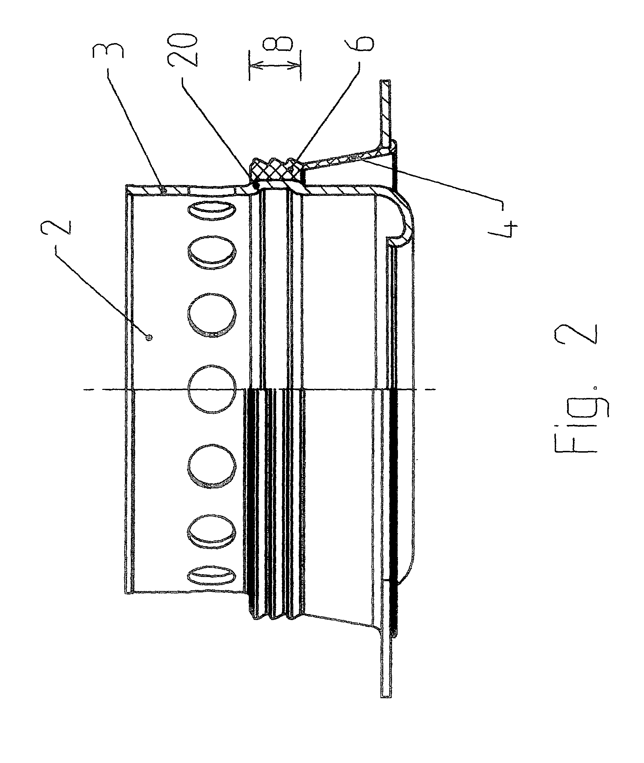

In der Fig. 2 ist das Filterrohr 2, welches die Gasgeneratorwand 3 bildet, wiederum teilweise in der Ansicht und im Schnitt gezeigt. Der in der voranstehenden Fig. geschilderte prinzipielle Aufbau wird beibehalten, jedoch ist in dieser Ausführungsform die Gasgeneratorwand 3 an der Verbindungsstelle 8 für die Membran 4 mit einer nach außen hervorstehenden Ringswulst 20 versehen. Diese Ringwulst 20 erleichtert die Anbringung des Rings 6 der Membran 4 an der Gasgeneratorwand 3.

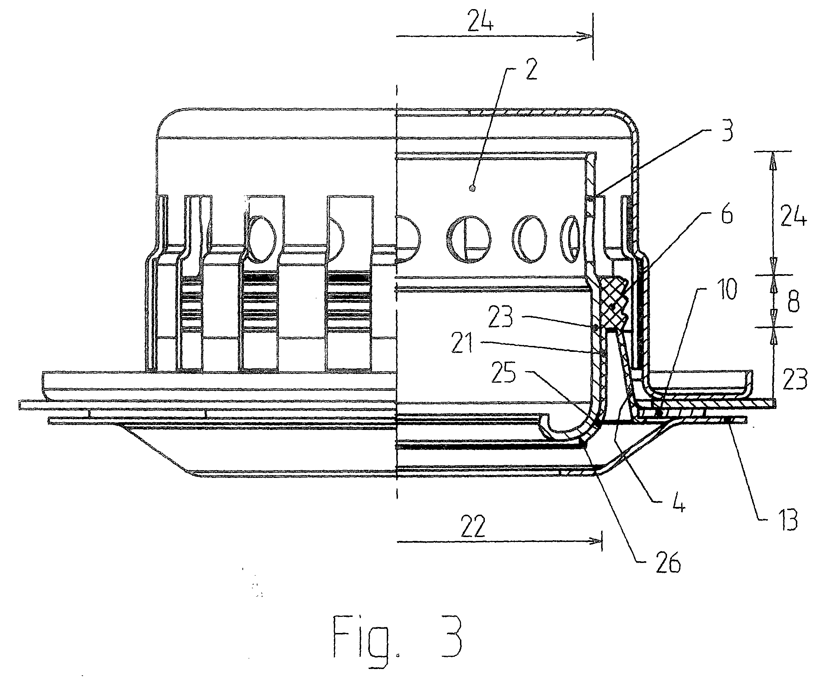

Eine andere Ausführungsform des Filterrohres 2 und der Verbindung mit der Membran 4 ist in der Fig. 3 gezeigt. Bei dieser Ausführungsform wird das Filterrohr 2 bzw. die Gasgeneratorwand 3 unterhalb der Verbindungsstelle 8 für die Membran 4 mit dem Überzug 21 versehen. Die Membran 4, der Ring 6 und der Überzug 21 sind eine Einheit und bestehend aus dem gleichen Material. Sie werden in einem Vulkanisationsschritt mit der Gasgeneratorwand 3 und dem Befestigungsblech 10 verbunden. Um die Fertigung zu erleichtern, wird die Gasgeneratorwand 3 im Anschlussbereich 8 für den Ring 6 und im Bereich 23 des Überzugs 21 mit einem größeren Durchmesser 22 als der darüberliegende Bereich 24 der Gasgeneratorwand versehen. Darüber hinaus wird der Überzug 21 an seinem unteren Ende 25 mit der Randwulst 26 versehen, die als Anschlagsdämpfung für axiale Bewegungen am Bodenblech 13 dient.

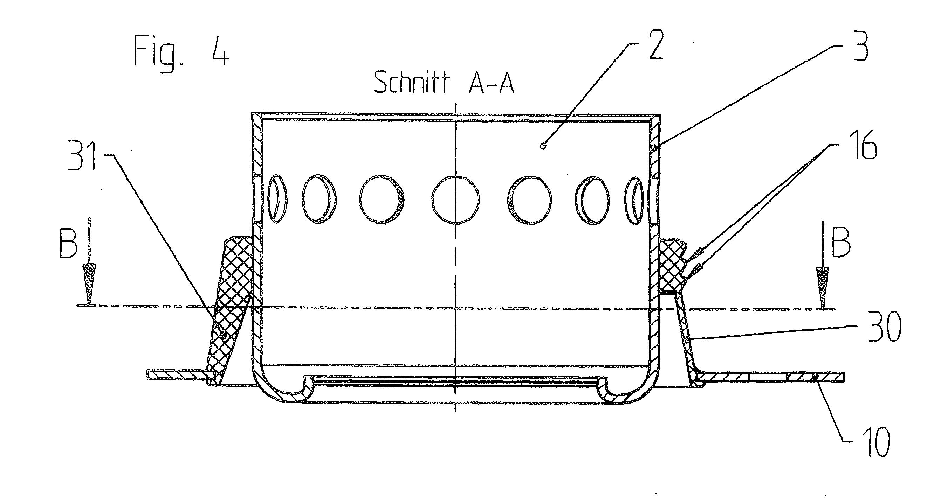

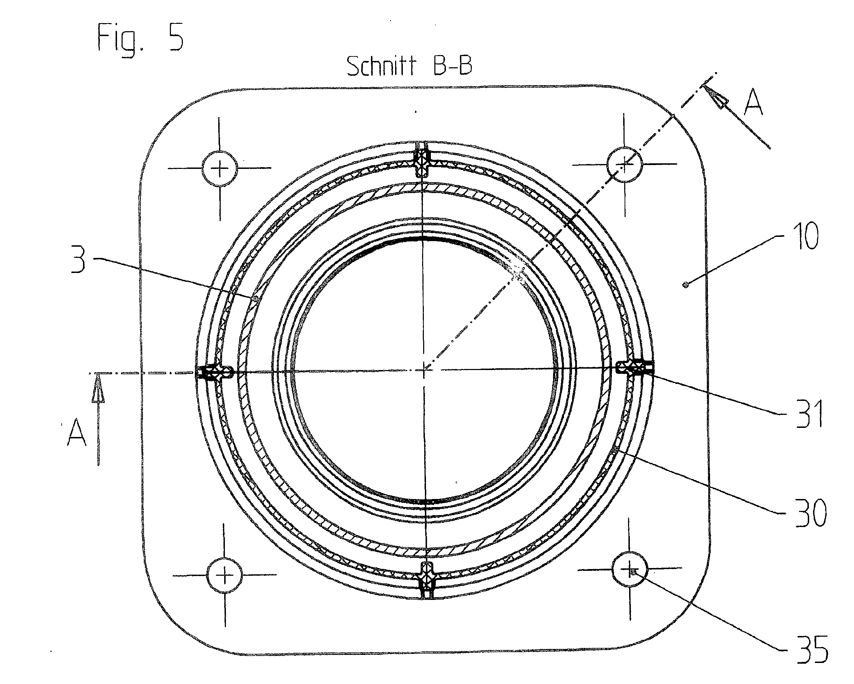

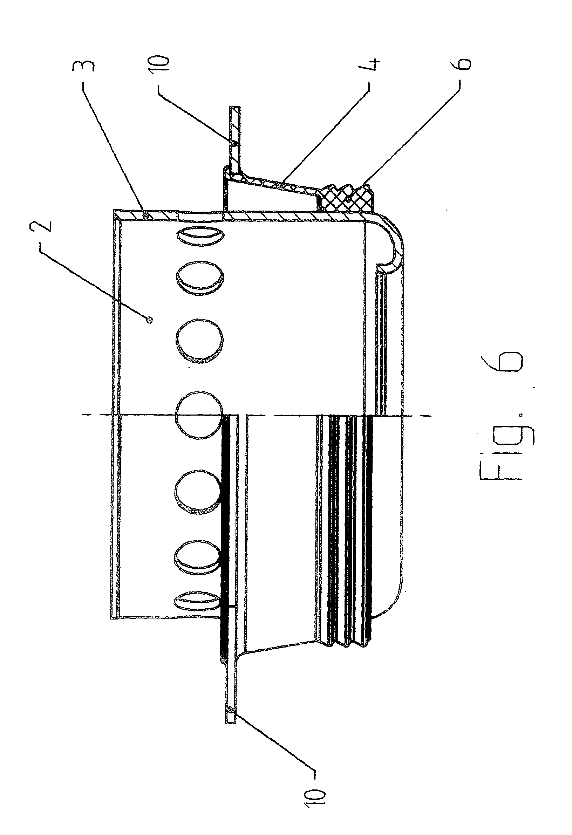

In der Fig. 4 ist im Schnitt eine Ausführungsform gezeigt, bei der ein Filterrohr 2 gezeigt ist, an dem eine Membran 30 angebracht ist, die auf ihren Umfang verteilt mit längs zur Membran 30 verlaufenden Verstärkungsstegen 31 versehen ist. An ihrem unteren Ende ist die Membran 30 mit dem Bestfestigungsblech 10 versehen. Die Membran 30 kann ebenfalls mit Anschläge dämpfenden Vorsprüngen versehen sein. Die Fig. 5 zeigt einen Schnitt nach der Linie B-B der Fig. 4. Sichtbar ist die etwa quadratische Form des Befestigungsbleches 10 mit den Öffnungen 35 für die Befestigungsschrauben oder auch Nieten, die Membran 30 mit den Verstärkungsstegen 31 und die Gasgeneratorwand 3.
Der Vollständigkeit halber zeigt die Fig. 6 eine Ausführungsform der Membran 4, bei der die Membran 4 mit dem kleineren Durchmesser des Kegelstumpfs nach unten ausgerichtet ist. Der Ring 6 befindet sich hier am unteren Ende der Membran 4 und das Befestigungsblech 10 am oberen Ende. Der Befestigungsring 6 ist direkt an der Gasgeneratorwand 3 befestigt. Das Filterrohr 2 und auch alle anderen Teile sind identisch mit der Ausführungsform nach der Fig. 1.

## Patentansprüche

1. Gasgenerator für einen Airbag an einem Kraftfahrzeug-Lenkrad, der beweglich als Schwingungsdämpfermasse über eine gasundurchlässige, ringförmige Membran aus polymerem Material und ein an einem ihrer Ränder angebrachtes Befestigungsblech mit dem Airbaggehäuse verbunden ist, **dadurch gekennzeichnet, dass** die Membran (4,30) mit ihrem verbliebenen anderen Rand (5) direkt an die Außenwand (3) des Gasgenerators (1) anschließt.

2. Gasgenerator nach Anspruch 1, **dadurch gekennzeichnet, dass** die Membran (4) kegelstumpfförmig ausgebildet ist.

3. Gasgenerator nach Anspruch 1 oder 2, **dadurch gekennzeichnet, dass** die Membran (4) über einen für die Verbindung mit der Gasgeneratoraußenwand (3) verwendeten Teilbereich (8) auf ihrer Innenseite zylindrisch ausgebildet ist.

4. Gasgenerator nach einem der Ansprüche 1 bis 3 **dadurch gekennzeichnet, dass** der Teilbereich (8) der Membran (4) eine verstärkte Wanddicke (7) und die Form eines Ringes (6) hat.

5. Gasgenerator nach einem der Ansprüche 1 bis 4, **dadurch gekennzeichnet, dass** der Gasgenerator (1) von einem Airbagabstandsblech (11) zumindest teilweise überdeckt ist.

6. Gasgenerator nach einem der Ansprüche 1 bis 5, **dadurch gekennzeichnet, dass** die Außenseite des Ringes (6) mit Anschläge dämpfenden Vorsprüngen (16) versehen ist.

7. Gasgenerator nach einem der Ansprüche 1 bis 6, **dadurch gekennzeichnet, dass** die Verbindung zwischen der Membran (4) und der Gasgeneratorwand (3) durch Vulkanisation hergestellt ist.

8. Gasgenerator nach einem der Ansprüche 1 bis 7, **dadurch gekennzeichnet, dass** die Gasgeneratorwand (3) an der Verbindungsstelle (8) für die Membran (4) mit einer nach außen hervorstehenden Ringwulst (20) versehen ist.

9. Gasgenerator nach einem der Ansprüche 1 bis 8, **dadurch gekennzeichnet, dass** die Gasgeneratorwand (3) unterhalb der Verbindungsstelle (8) für die Membran (4) einen Überzug (21) aus polymerem Material hat.

10. Gasgenerator nach .einem der Ansprüche 1 bis 9, **dadurch gekennzeichnet, dass** Membran (4), Ring (6) und Überzug (21) aus dem gleichen Material bestehen und in einem Vulkanisationsschritt mit der Gasgeneratorwand (3) und dem Befestigungsblech (10) verbunden sind.

11. Gasgenerator nach einem der Ansprüche 1 bis 10, **dadurch gekennzeichnet, dass** die Gasgeneratorwand (3) im Anschlussbereich (8) für den Ring (6) und im Bereich (23) des Überzugs (21) einen größeren Durchmesser (22) hat als der darüberliegende Bereich (24) der Gasgeneratorwand (3).

12. Gasgenerator nach einem der Ansprüche 1 bis 11, **dadurch gekennzeichnet, dass** der Überzug (21) an seinem unteren Ende (25) eine Anschläge dämpfende Randwulst (26) hat.

13. Gasgenerator nach einem der Ansprüche 1 bis 12, **dadurch gekennzeichnet, dass** die Membran (30) auf ihrem Umfang verteilt mehrere längs der Membran (30) verlaufende Verstärkungsstege (31) hat.
